# EUROPEAN PATENT SPECIFICATION

(11) **EP 3 754 240 B1**
(45) Date of publication and mention of the grant of the patent: **16.03.2022**
(21) Application number: 20180716.1
(22) Date of filing: 18.06.2020
(51) Int. Cl.: F16L 5/02

(54) **DEVICE FOR THE PROTECTION AND COVERING OF A WATER TIGHT LEAD-THROUGH**
VORRICHTUNG ZUM SCHUTZ UND ZUR ABDECKUNG EINER WASSERDICHTEN DURCHFÜHRUNG
DISPOSITIF POUR LA PROTECTION ET LA COUVERTURE D'UNE TRAVERSÉE ÉTANCHE À L'EAU

(30) Priority: 19.06.2019 SE 1950757
(43) Date of publication of application: 23.12.2020
(73) Proprietor: Foolproof AB, 741 71 Knivsta (SE)
(72) Inventor: GERGER, Patrik, 741 45 KNIVSTA (SE)
(74) Representative: Brann AB

(56) References cited:
- EP-A1- 2 169 289
- CN-A- 109 378 786
- US-A- 3 871 145
- US-A- 5 775 702

## Description

The present invention relates to a Device for the protection and covering of a water tight lead-through for e.g. pipes, tubings or cables through floors or walls.

### Background

Buildings are frequently subject to water damage rendering costs in the range of several billions SEK every year in Sweden only.

Many of these damages are caused by pipe/tubing connections or couplings leaking out water onto moisture sensitive construction materials.

In order to prevent the occurrence of damages of this kind pipe lead-throughs are properly sealed using suitable sealing materials. Butyl rubber can be used as the sealing material but of course any other secure sealing materials or devices can be used, such as silicone or poly-urethane. The application of the sealing material is normally made manually and the material is shaped so as to conform to the location where it is applied and such that the sealing becomes water-tight.

Sealings of this kind are used for lead-throughs for water pipes, sewage pipes, tubings and cables in walls and floors. Advantageously they are applied in bathrooms, shower rooms, wash houses and other spaces where water is frequently used, but the can also be applied for radiators, installations in kitchen such as dish washer pipings etc.

In order to cover and protect these sealings it is common to provide housings arranged to encircle the pipe or tubing in question such that the housing rests against the floor or wall through which the pipe/tubing extends. Most of the products available have a mere decorative function. Suitably there is also provided some sealing function against the wall or floor and the pipe/tubing.

Generally there are two types of devices having both a decorative and a sealing function.

A first type is passed over the pipe. The problem with this type is that it cannot be applied to fixed installations without turning off the water supply, loosen the pipe and then pass it onto the pipe. This type of device is often glued to the floor in order to provide a water tight installation. However, this makes it impossible to inspect the sealing hidden by the device since it is fixed to the floor.

A second type can be opened and is provided with a locking mechanism. However, the currently available devices have small and fragile locking mechanisms. Therefore, if the device is fixed around a pipe and locked it frequently may happen that the locking mechanism is placed under such tension that it might not withstand the forces and breaks, i.e. it can come off.

An additional issue is that there is a large number of dimensions of pipes, tubings and cables in one building and thus, a craftsman who is to mount a device of the described type would need to bring numerous different sizes of devices with him in order to be able to make the installation.

One example of a device of the latter type is disclosed in SE 531 729 C2 (Inge Carlsson). This particular example allows a very small space for accommodating the sealing material provided around the pipe or tubing in question, and renders installation to provide an acceptable sealing rather difficult.

In EP2169289 a sealing collar for openings through walls is disclosed. In US5775702 a sealing arrangement for sealing an annular space around an elongated object is disclosed. In US3871145 a flashing unit for machinery such as air-conditioners is disclosed. In CN109378786 an adjustable insulation sheath for preventing small animals is disclosed.

### Summary of the invention

In order to eliminate the disadvantages of the prior art devices, the inventor has devised a novel device for the protection and covering of a water tight pipe lead-through.

The novel device is defined in claim 1.

By the provision of the variable locking mechanism, the number of different dimensions needed to be kept in stock is reduced.

Preferred embodiments are defined in the dependent claims.

### Brief description of the drawings

The invention will be described in detail below with reference to the drawing figures in which
Fig. 1 shows a device in a perspective view in a mounted and locked state;
Fig. 2 shows a device in a perspective view in an open state before mounting;
Fig. 3 shows a device turned up-side-down in an unlocked position;
Fig. 4 schematically illustrates a first step of attaching a device to a pipe; and
Fig. 5 schematically illustrates a second step of attaching a device to a pipe.
Fig. 6 shows an embodiment of the tooth configuration with vertical orientation; and
Fig. 7 shows an embodiment of the tooth configuration with tilted orientation.

### Detailed description of preferred embodiments

Below a device according to the invention will be described by means of illustrative embodiments.

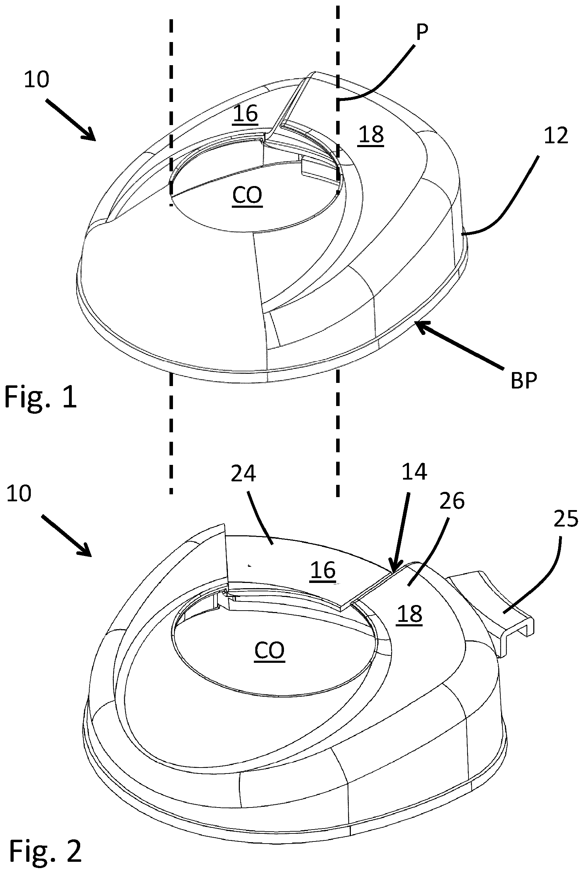

Reference is now made to Fig. 1 and 2.

The device 10 in its most generic form comprises a housing 12 of a flexible material having a central opening CO. The housing has a cut-through portion, i.e. a cut entirely through the housing and extending from the outer bottom periphery BP of the housing and to the central opening CO whereby a gap 14 (Fig. 2) between a first 16 and a second 18 portion of said housing 12 can be or is formed. In this way the housing 12 can be applied to a pipe P (indicated with broken lines) without having to disassemble the pipe installation. There is a locking mechanism for closing the gap 14 and locking the housing 12 in position around the pipe. The locking mechanism comprises first locking means provided on the first portion 16 of the housing 12, and second locking means provided on the second portion 18 of the housing 12, said locking means mating with each other. The first and second locking means are configured to be lockable to each other over a range of different positions along the circumference of said housing 12.

Fig. 1 shows in perspective view a first embodiment of a device 10 for the protection and covering of a water tight lead-through in a perspective view.

The device 10 is adapted to be positioned around a pipe or a tube P, indicated with a ghost line in Fig. 1. The device comprises a housing 12 of a flexible material such that easily can conform to the shape and size of the pipe or tubing around which it is to be mounted. Suitably the housing is made from e.g. poly-propylene (PP) or other polymer material having similar properties.

The housing 12 is essentially dome shaped, and has a central opening CO facing upwards, said opening having a first size/diameter, and the outer bottom periphery BP of the housing has a size/diameter larger than the size/diameter of said opening, such that the housing in mounted condition is capable of accommodating enough sealing material to provide a proper sealing of the lead-through. The bottom periphery BP is preferably formed with a slightly thicker material, forming circumferential ledge providing enhanced rigidity so as to prevent deformation of the housing 12 under tension in mounted state.

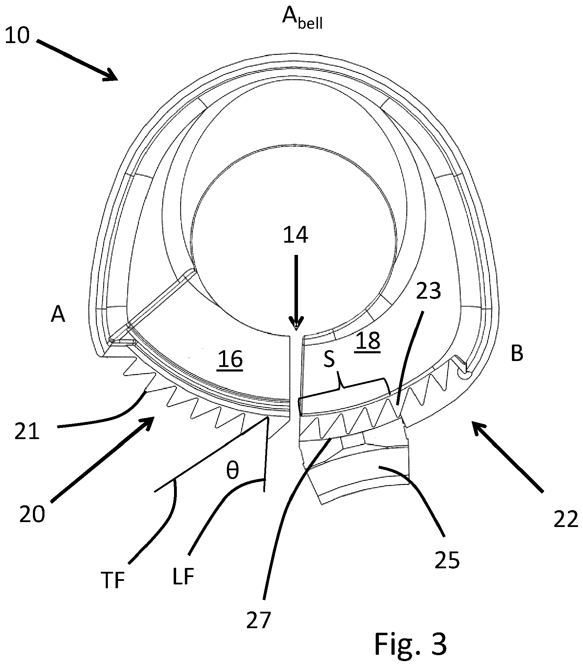

The central opening CO of the housing 12 is adapted for accommodating the pipe P around which it is to be mounted. Further details of the geometry of this opening will be given below. There is a cut-out or cut-through portion 14 (see Figs. 2 and 3) in the housing 12 body extending from the outer (bottom) periphery BP (resting against a floor or a wall when attached) of the housing 12 and through the housing to the central opening CO. This cut through the housing 12 thereby forms or can form a gap 14 between a first portion 16 and a second 18 portion of the housing 12. This gap 14 can be very small, in principle infinitesimal, i.e. such that the "free ends",i.e. the first and second portions 16, 18, formed by the cut, abut each other.

In the shown embodiment the bottom contour of the housing 12 is essentially bell shaped, as clearly seen in Fig. 3, which shows the device up-side-down. The apex part A_{bell} of the bell shape, facing outwards from the wall at which the device is mounted, is suitably designed to present a decorative cover of the pipe lead-through. The first and second portions 16, 18 carry a locking mechanism 20, 22, which will be described further below. The locking mechanism, which is located at the opposite side of the device with respect to the decorative front side, will not be visible from within the room in which the device is mounted. The first and second portions 16, 18 form the base of the bell shape, and in the shown embodiment, due to the bell shaped contour, they will form an angle with the apex part. Furthermore, the material thickness of the first and second portions 16, 18 is suitably greater than the remainder of the housing 12, due to the presence of the parts forming the locking mechanism 20, 22.

The bell shape of the contour is only an option and a design choice, and the housing 12 could be made with basically any other geometry, such as circular, quadratic, polygonal etcetera, which all are within the scope of the inventive concept.

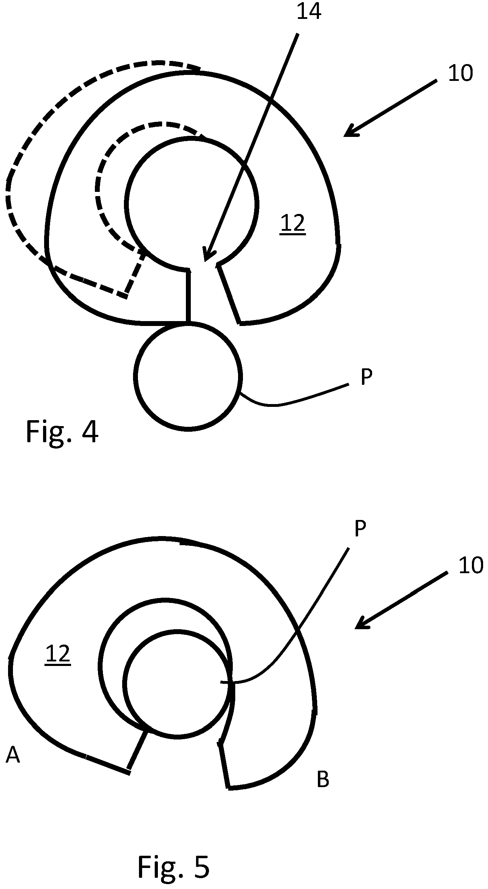

By the provision of the cut-out or cut-through portion forming the gap 14, the housing 12 can be applied to, i.e. "threaded onto" the pipe by slightly widening the gap 14, which is possible due to the flexibility of the material in the housing 12, and passing it over the pipe P, as shown in the schematic Fig. 4. Thus, the device 10 can be mounted to the pipe P without having to disassemble the pipe installation.

The device is also provided with a locking mechanism for closing the gap 14 and for locking the housing 12 in position around the pipe.

The locking mechanism comprises first locking means 20 provided on the first portion 16 of the housing 12, and second locking means 22 (not visible in Fig. 1) provided on the second portion 18 of the housing 12. The locking means 20, 22 are designed to mate with each other in a locking manner. Details of the locking means will be given below.

In particular the first and second locking means 20, 22 are configured to be lockable to each other over a range of different positions along the circumference of said housing 12, which has as a result that the width of the central opening CO will vary accordingly. A latch member 25 is provided to secure the locking means 20, 22 in a selected position. This feature of selectable locking positions thus makes it possible to use the same device for different sizes of pipe or tubing within certain limits. Thereby the number of different sizes of protective devices that must be kept in stock can be reduced significantly.

Fig. 3 shows the device 10 up-side-down and illustrates one embodiment of the locking mechanism in more detail.

In this embodiment the first locking means comprises a plurality of teeth 21, arranged on said first portion 16 of the housing 12. The first portion 16 is here suitably configured as a tab like member extending circumferentially on the housing body. The teeth 21 extend radially outwards on this tab like member, but have a height, i.e. distance from base to apex, such that the apex of a tooth 21 is located slightly below the outer surface of the housing 12.

The second portion 18 of the housing 12 is provided with recesses 23 facing inwards, and configured to mate with the teeth 21 on the first portion 16.

The teeth 21 can thus be provided on said first portion 16 of the housing 12, said first portion extending circumferentially. The teeth 21 extend outwards in a radial direction, and the recesses (23) are provided on the inner wall of the housing.

Alternatively, the teeth 21 can be provided on the inner wall of the housing 12, and extend inwards in a radial direction. The recesses 23 are then provided on said first portion 16 of the housing instead.

The tooth design is given by the angles between flanks of the teeth. Thus, the teeth are defined by the angle θ (see Fig. 3), which is formed by a leading flank LF of one tooth and the trailing flank TF of a subsequent tooth. The leading flank of a tooth is angled such that the tooth attains a hook like function. Suitably the angle θ is in the range 30 - 60°, preferably 45 - 50°, in a preferred embodiment θ is 48°, which results in an optimal locking function.

When the device is to be mounted around a pipe P the gap 14 is widened, which it is possible due to the flexibility of the material from which the device is made, and the device is passed onto the pipe P from the side through the widened gap 14. This is schematically illustrated in Fig. 4, wherein the device in a widened state is shown in broken lines.

Then, when the device is in position around the pipe, shown schematically in Fig. 5, the housing is e.g. gripped between thumb and forefinger at A and B (see Figs. 2 and 4), and a pinching action is performed. Thereby, the first portion 16 carrying the teeth 21 will slide in under the second portion 18 carrying the recesses 23, whereby the teeth 21 will engage in the recesses 23.

The pinching action is continued until the housing 12 fits snugly around the pipe to which it is to be mounted.

In order to secure the desired position on the pipe there is provided a securing means in the form of a latch 25, as mentioned previously. In the shown embodiment this securing means is designed as a U-shaped latch member 25 hinged 27 to the housing 12 near its bottom periphery. The hinge 27 is integrated with the housing 12 and is suitably simply a thinner piece of material and advantageously forms in the molding procedure when the device is made.

The U-shaped latch member 25 is thus pivotally connected to the housing 12 by means of the hinge 27, in the shown embodiment it is attached to the second portion 18 of the housing and arranged such that when the locking means 20, 21, 22, 23 are positioned as desired, i.e. in an overlapping manner with the teeth 21 engaging in the recesses 23, it can be pivoted over the bottom periphery of the housing and snap-fitted across the two engaged locking means. The second portion 18, carrying recesses 23, do not extend widthwise, i.e. in the vertical direction of the device as seen in the figures, entirely down to the bottom periphery BP of the housing, at least over a section S where the latch 25 is provided, but leaves a free space in the transverse direction relative to the circumference corresponding to the thickness of the U-shaped latch member 25 such that the latch bottom will be flush with the housing bottom periphery BP when it has been placed in locking engagement with the first and second portions 16, 18. This requires that the first portion 16 carrying the teeth also has a reduced width corresponding to the reduction in width of the second portion 18 in order to accommodate the latch 25. In this way the entire device will rest on the floor in a proper manner. The latch member 25 also secures vertical height fixing of the overlapping parts of the device.

Preferably not only the locking means, i.e. in the shown embodiment the teeth 21 and the recesses 23 are designed to be overlapping. Namely, the first portion 16 carrying the teeth 21 has an upper essentially horizontal part forming a lower "roof" portion 24 of said first portion 16, and the second portion 18 carrying the recesses 23 has an upper essentially horizontal part forming an upper "roof" portion 26 of said second portion 18. These two "roof" portions will also overlap when the device 10 is mounted to a pipe P.

When the device 10 is attached to a pipe P by pressing on the opposing points A and B on the housing 12 such that the first portion 16 slides in under the second portion 18, of course simultaneously the upper and lower roof portions 24, 26 will also slide together. Thereby, the upper roof portion 26 will automatically fix the height level for the lower roof portion 24.

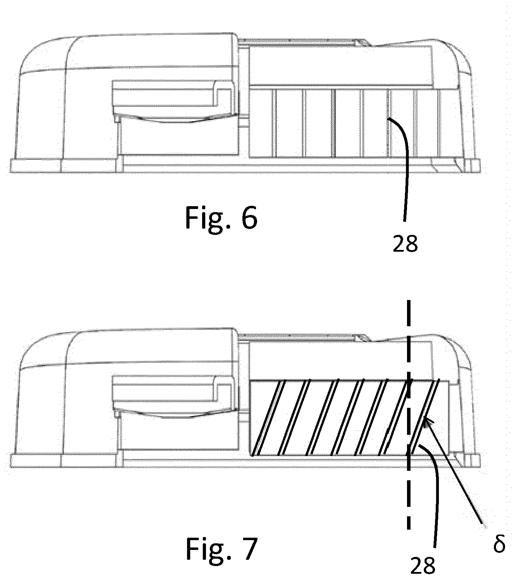

In the embodiments shown in Figs. 1-3 the teeth 21 form ridges 28 which are essentially vertical with respect to the orientation of the device in mounted state, i.e. resting on a floor. This is illustrated in Fig. 6. However, preferably the tooth ridges 28 are slightly tilted, i.e. form an angle δ with respect to the vertical in a circumferential direction such that they deviate from the vertical to some extent. This is illustrated in Fig.7. By the provision of tilt the possible sliding of the teeth 21 within the recesses is prevented, i.e. a locking in vertical direction is obtained, such that the first and second portions 16, 18 cannot come apart. The angle δ can be in the range 5° -15°, suitably around 10°.

A further feature of the device 10 is that the central opening CO in a nominal condition, i.e. as delivered and before mounting to a pipe has a slightly elliptical shape. When the device is attached to e.g. a pipe by pressing on the outer periphery to bring the locking members into engagement as explained above, the opening will conform to the circular shape of the pipe thereby providing a tight connection against the pipe.

The invention is not limited to the above described embodiments, but alternatives are possible within the inventive concept.

For example the locking mechanism can comprise circumferentially arranged ledges in combination with circumferential mating recesses that provide a friction fit instead of the tooth and recess engagement described. In this embodiment instead the latch means can e.g. be provided with a small protruding member mating with corresponding notches, arranged at intervals on the bottom periphery of the device, so as to provide a plurality of locking positions.

Also, the locking mechanism can of course be arranged in an opposite fashion to what has been described above. Namely the teeth 21 can equally well be provided on the second portion and extend radially inwards, whereby of course the recesses would be provided on the first portion.

An alternative to the U-shaped latch mechanism could be a snap-fit member on the very end of e.g. the first portion 16 mating with recesses provided in the second portion at intervals, so as to provide a plurality of locking positions, to prevent uplifting of the upper roof portion 26 when locking the device.

Thus, there are numerous variations conceivable within the inventive concept, and the invention is only limited by the terms of the claims.

## Claims

1. A device (10) for the protection and covering of a watertight pipe lead-through, and adapted to be positioned around a pipe (P) or a tube, comprising
- a housing (12) of a flexible material having a central opening (CO), the housing having a cut-through portion, i.e. a cut entirely through the housing and extending from the outer bottom periphery (BP) of the housing and to the central opening (CO) whereby a gap (14) between a first (16) and a second (18) portion of said housing (12) can be or is formed, such that the housing (12) can be applied to a pipe without having to disassemble the pipe installation;
- and a locking mechanism for closing the gap (14) and locking the housing (12) in position around the pipe;
**characterized in that**
- the locking mechanism comprises first locking means (20) provided on the first portion (16) of the housing (12), and second locking means (22) provided on the second portion (18) of the housing (12), said locking means (20, 22) mating with each other, wherein
- the first and second locking means (20, 22) are configured to be lockable to each other over a range of different positions along the circumference of said housing (12),
wherein one of the first and second locking means is provided with teeth (21) and the other of the first and second locking means is provided with mating recesses (23) in which the teeth can engage,
wherein the teeth (21) are provided on said first portion (16) of the housing (12), said first portion extending circumferentially, and wherein the teeth (21) extend outwards in a radial direction, and wherein the recesses (23) are provided on an inner wall of the housing, or
wherein the teeth (21) are provided on the inner wall of the housing, and wherein the teeth (21) extend inwards in a radial direction, and wherein the recesses (23) are provided on said first portion (16) of the housing, said first portion extending circumferentially.

2. The device according to claim 1, further comprising a securing latch (25) to secure the first and second locking means to each other in a selected position.

3. The device according to claim 1 or 2, wherein the teeth (21) are tilted away from the direction of extension of the portion of the housing (12) on which they are provided.

4. The device according to claim 3, wherein the tilt angle is 30° - 60°, preferably 45° - 50°, most preferred 48°.

5. The device according to any preceding claim, wherein the housing (12) is essentially dome shaped, and has an opening (CO) facing upwards said opening having a first size/diameter, and wherein the outer bottom periphery (BP) of the housing has a size/diameter larger than the size/diameter of said opening (CO), such that the housing (12) in mounted condition is capable of accommodating enough sealing material to provide a proper sealing of the lead-through.

6. The device according to any preceding claim, wherein the central opening (CO) in a nominal condition, i.e. as delivered and before mounting to a pipe has a slightly elliptical shape, such that when the device is attached to e.g. a pipe, the opening will conform to the circular shape of the pipe thereby providing a tight connection to the pipe.

7. The device according to any preceding claim, wherein the first portion (16) has an upper essentially horizontal part forming a lower roof portion (24), and the second portion (18) has an upper essentially horizontal part forming an upper roof portion (26), said two roof portion overlapping when the device (10) is mounted to a pipe (P).

## Patentansprüche

1. Vorrichtung (10) für den Schutz und die Abdeckung einer wasserdichten Rohrdurchführung und die angepasst ist, um ein Rohr (P) oder einen Schlauch positioniert zu werden, umfassend
- ein Gehäuse (12) aus einem flexiblen Material mit einer mittleren Öffnung (CO), wobei das Gehäuse einen durchgeschnittenen Abschnitt aufweist, d.h. einen Schnitt, der vollständig durch das Gehäuse verläuft und sich von dem äußeren Bodenumfang (BP) des Gehäuses und zu der mittleren Öffnung (CO) erstreckt, wobei ein Spalt (14) zwischen einem ersten (16) und einem zweiten (18) Abschnitt des Gehäuses (12) gebildet werden kann oder ist, sodass das Gehäuse (12) an einem Rohr angebracht werden kann, ohne die Rohrinstallation zu demontieren;
- und einen Verriegelungsmechanismus zum Schließen des Spalts (14) und Verriegeln des Gehäuses (12) in Position um das Rohr;
**dadurch gekennzeichnet, dass**
- der Verriegelungsmechanismus erste Verriegelungsmittel (20), die auf dem ersten Abschnitt (16) des Gehäuses (12) vorgesehen sind, und zweite Verriegelungsmittel (22), die auf dem zweiten Abschnitt (18) des Gehäuses (12) vorgesehen sind, umfasst, wobei die Verriegelungsmittel (20, 22) zueinander passen, wobei
- die ersten und zweiten Verriegelungsmittel (20, 22) eingerichtet sind, miteinander über eine Spanne unterschiedlicher Positionen entlang des Umfangs des Gehäuses (12) verriegelbar zu sein,
wobei eines der ersten und zweiten Verriegelungsmittel mit Zähnen (21) versehen ist und das andere der ersten und zweiten Verriegelungsmittel mit passenden Aussparungen (23) versehen ist, in die die Zähne eingreifen können,
wobei die Zähne (21) auf dem ersten Abschnitt (16) des Gehäuses (12) vorgesehen sind, wobei sich der erste Abschnitt um den Umfang erstreckt, und wobei sich die Zähne (21) in einer radialen Richtung nach außen erstrecken und wobei die Aussparungen (23) an einer Innenwand des Gehäuses vorgesehen sind, oder
wobei die Zähne (21) an der Innenwand des Gehäuses vorgesehen sind und wobei sich die Zähne (21) in einer radialen Richtung nach innen erstrecken und wobei die Aussparungen (23) an dem ersten Abschnitt (16) des Gehäuses vorgesehen sind, wobei sich der erste Abschnitt um den Umfang erstreckt.

2. Vorrichtung nach Anspruch 1, weiter umfassend einen Sicherheitsriegel (25) zum Sichern der ersten und zweiten Verriegelungsmittel in einer ausgewählten Position aneinander.

3. Vorrichtung nach Anspruch 1 oder 2, wobei die Zähne (21) von der Erstreckungsrichtung des Abschnitts des Gehäuses (12), auf dem sie vorgesehen sind, weg geneigt sind.

4. Vorrichtung nach Anspruch 3, wobei der Neigungswinkel 30° - 60°, bevorzugt 45° - 50°, besonders bevorzugt 48° ist.

5. Vorrichtung nach einem vorstehenden Anspruch, wobei das Gehäuse (12) im Wesentlichen kuppelförmig ist und eine Öffnung (CO) aufweist, die nach oben weist, wobei die Öffnung eine erste Größe/einen ersten Durchmesser aufweist und wobei der Bodenumfang (BP) des Gehäuses eine Größe/einen Durchmesser aufweist, die/der größer ist als die Größe/der Durchmesser der Öffnung (CO), sodass das Gehäuse (12) in montiertem Zustand imstande ist, ausreichend Dichtungsmaterial aufzunehmen, um eine angemessene Dichtung der Durchführung vorzusehen.

6. Vorrichtung nach einem vorstehenden Anspruch, wobei die mittlere Öffnung (CO) in einem normalen Zustand, d.h. wie geliefert und vor Montage an einem Rohr, eine leicht elliptische Form aufweist, sodass, wenn die Vorrichtung z.B. an einem Rohr befestigt ist, die Öffnung sich an die Kreisform des Rohrs anpasst, wodurch eine dichte Verbindung mit dem Rohr vorgesehen wird.

7. Vorrichtung nach einem vorstehenden Anspruch, wobei der erste Abschnitt (16) einen oberen, im Wesentlichen horizontalen Teil aufweist, der einen unteren Dachabschnitt (24) bildet, und der zweite Abschnitt (18) einen oberen, im Wesentlichen horizontalen Teil aufweist, der einen oberen Dachabschnitt (26) bildet, wobei die zwei Dachabschnitte überlappen, wenn die Vorrichtung (10) an einem Rohr (P) montiert ist.

## Revendications

1. Dispositif (10) pour la protection et la couverture d'une traversée de tuyau étanche à l'eau, et adapté pour être positionné autour d'un tuyau (P) ou d'un tube, comprenant
- un boîtier (12) d'un matériau flexible présentant une ouverture centrale (CO), le boîtier présentant une portion fendue, c'est-à-dire une découpe entièrement à travers le boîtier et s'étendant à partir de la périphérie inférieure extérieure (BP) du boîtier et jusqu'à l'ouverture centrale (CO) selon lequel un interstice (14) entre une première (16) et une seconde (18) portion dudit boîtier (12) peut être ou est formé, de telle sorte que le boîtier (12) puisse être appliqué sur un tuyau sans avoir à désassembler l'installation de tuyau ;
- et un mécanisme de verrouillage permettant de fermer l'interstice (14) et de verrouiller le boîtier (12) en position autour du tuyau ;
**caractérisé en ce que**
- le mécanisme de verrouillage comprend un premier moyen de verrouillage (20) fourni sur la première portion (16) du boîtier (12), et un second moyen de verrouillage (22) fourni sur la seconde portion (18) du boîtier (12), lesdits moyens de verrouillage (20, 22) s'accouplant l'un à l'autre, dans lequel
- les premier et second moyens de verrouillage (20, 22) sont configurés pour pouvoir être verrouillés l'un avec l'autre sur une plage de positions différentes le long de la circonférence dudit boîtier (12),
dans lequel un des premier et second moyens de verrouillage est pourvu de dents (21) et l'autre des premier et second moyens de verrouillage est pourvu d'évidements (23) d'accouplement dans lesquels les dents peuvent venir en prise,
dans lequel les dents (21) sont fournies sur ladite première portion (16) du boîtier (12), ladite première portion s'étendant de manière circonférentielle, et dans lequel les dents (21) s'étendent vers l'extérieur dans une direction radiale, et dans lequel les évidements (23) sont fournis sur une paroi intérieure du boîtier, ou
dans lequel les dents (21) sont fournies sur la paroi intérieure du boîtier, et dans lequel les dents (21) s'étendent vers l'intérieur dans une direction radiale, et dans lequel les évidements (23) sont fournis sur ladite première portion (16) du boîtier, ladite première portion s'étendant de manière circonférentielle.

2. Dispositif selon la revendication 1, comprenant en outre un loquet de fixation (25) pour fixer les premier et second moyens de verrouillage l'un à l'autre dans une position sélectionnée.

3. Dispositif selon la revendication 1 ou 2, dans lequel les dents (21) sont inclinées à distance de la direction d'extension de la portion du boîtier (12) sur laquelle elles sont fournies.

4. Dispositif selon la revendication 3, dans lequel l'angle d'inclinaison est de 30° - 60°, préférentiellement de 45° - 50°, le plus préférentiellement de 48°.

5. Dispositif selon une quelconque revendication précédente, dans lequel le boîtier (12) est essentiellement en forme de dôme, et présente une ouverture (CO) faisant face vers le haut à ladite ouverture présentant une première taille/un premier diamètre, et dans lequel la périphérie inférieure extérieure (BP) du boîtier présente une taille/un diamètre plus grande/plus grand que la taille/le diamètre de ladite ouverture (CO), de telle sorte que le boîtier (12) à l'état monté soit capable de contenir assez de matériau d'étanchéité pour fournir une étanchéité correcte de la traversée.

6. Dispositif selon une quelconque revendication précédente, dans lequel l'ouverture centrale (CO) dans un état nominal, c'est-à-dire telle que livrée et avant un montage sur un tuyau, présente une forme légèrement elliptique, de telle sorte que lorsque le dispositif est attaché à un tuyau par exemple, l'ouverture se conforme à la forme circulaire du tuyau fournissant ainsi une liaison étroite avec le tuyau.

7. Dispositif selon une quelconque revendication précédente, dans lequel la première portion (16) présente une partie supérieure essentiellement horizontale formant une portion voûte inférieure (24), et la seconde portion (18) présente une partie supérieure essentiellement horizontale formant une portion voûte supérieure (26), lesdites deux portions voûte se recouvrant lorsque le dispositif (10) est monté sur un tuyau (P).
